# EUROPEAN PATENT SPECIFICATION

(11) **EP 0 634 106 B1**
(45) Date of publication and mention of the grant of the patent: **14.04.1999**
(21) Application number: 93111393.0
(22) Date of filing: 15.07.1993
(51) Int. Cl.: A23L 1/105, A23L 1/308

(54) **Process for treating water-soluble dietary fiber with beta-glucanase**
Verfahren zur Verarbeitung einer wasserlösslichen Diätfaser mit Beta-Glucanase
Procédé de traitement d'une fibre diététique hydrosoluble avec la bêta-glucanase

(43) Date of publication of application: 18.01.1995
(73) Proprietor: THE QUAKER OATS COMPANY, Barrington Illinois 60010 (US)
(72) Inventor: Smith, John J., Hoffman Estates, Illinois 60194 (US)
(74) Representative: Baillie, Iain Cameron

(56) References cited:
- EP-A- 0 058 133
- EP-A- 0 286 056
- WO-A-86/01080
- WO-A-89/08405
- WO-A-91/00027
- WO-A-92/10106
- KIRK-OTHMER 'Encyclopedia of chemical technology' 1980 , J.WILEY & SONS , NEW YORK.N.Y. third edition,volume 9 pages 214,215 * page 214, column 3, line 21 - line 26 * *page 215,"beta-glucanase","Cereflo 200"*

## Description

### FIELD OF INVENTION

The present invention relates to a process for treating water-soluble dietary fiber with beta-glucanase. The present invention further relates to the product of said treatment process and a method for preparing edible compositions utilizing the product of said treatment process.

### BACKGROUND OF INVENTION

Dietary fat intake has been associated with a number of undesired health problems such as obesity, cardiovascular disease, increased cholesterol levels, etc. Thus, there is a great desire to find edible ingredients which are capable of partially or totally replacing fats in foods, and a number of fat replacements are known in the art. However, there are a number of problems associated with many of these fat replacements. One such problem is that some fat replacements may not provide a final product having the same texture and/or mouthfeel as a product prepared with fat. For example, when certain fat replacements are used to prepare baked products, the final baked product is tougher, dryer (less moist) and has a lower volume than a product prepared with fat. Other examples of such problems include fat replacements which lack heat stability or exhibit undesirable physical effects on consumers, for example anal leakage.

Thus, a most desired fat replacement would mimic fats in all these areas, i.e., would provide products having the same or similar taste, feel, texture, heat stability and cooking properties as products prepared from fats, and yet would not possess or cause any of the undesirable properties or effects described above and would not have any additional undesirable physical effects of their own. Such is the case of the beta-glucanase treated water-soluble dietary fiber composition prepared in accordance with the present invention.

Alternatively, there are those who are unconcerned about fat in their diets and wish to maximize the mouthfeel and textural properties associated with fats. The beta-glucanase treated water-soluble dietary fiber compositions of the present invention, when used as a food additive instead of as a fat replacement, act in concert with any fats present in food products to amplify the texture and mouthfeel properties associated with such fats.

### BACKGROUND ART

Enzymes have long been used in food processing, one example being the use of yeast for fermentation. Furthermore, it has been known that particular enzymes are useful for specific applications since at least the middle of the 19th century.

The use of the enzyme beta-glucanase in food processing is also known. The Kirk-Othmer Encyclopedia of Chemical Technology, Third Edition, Volume 9, pp. 195-199 (1980), teaches that beta-glucanase is a carbohydrase and "beta-glucanase from Bacillus subtilis, and Asperillus niger, attacks the 1,3-beta and 1,4-beta linkages in yeast cell walls and barley. The barley beta-glucans are solubilized at 60-65 °C, the temperature at which starch is gelatinized in mashing for beer production. At this temperature the beta-glucanase present in barley is destroyed; addition of microbial beta-glucanase reduces viscosity and facilitates filtration of the mash." (See pages 198-199.) This reference also teaches, at p. 215, that beta-glucanase marketed as Cereflo™ 200 L (available from Novo Laboratories Inc., Wilton, Conn.), which is obtained from Bacillus subtilis and Candida utilis, "lowers beer or wort viscosity by degrading barley glucans to facilitate filtration; often found in varying amounts in B. subtilis amylase and protease preparations."

The art also teaches a process for preparing water-soluble dietary fiber compositions from oats. U.S. Patent 4,996,063, issued February 26, 1991 to Inglett, teaches preparing water-soluble dietary fiber compositions by treating an agueous dispersion of a gelatinized, milled, oat substrate with an alpha-amylase under conditions which will hydrolyze the substrate and yield a soluble fraction and an insoluble fraction, separating said soluble fraction from said insoluble fraction, and recovering from said soluble fraction said water-soluble dietary fiber substantially free of water-insoluble fiber. These water-soluble dietary fiber compositions are useful as food ingredients, and are particularly useful as fat replacements, since in addition to providing a product having few or none of the undesirable properties of fats as described above, the compositions also provide soluble dietary fiber, which has been shown in Burkitt et al. [Lancet 2: 1408-11 (1972)] to play a role in preventing certain large-intestine diseases, including cancer of the colon and diverticulitis. Furthermore, such soluble dietary fiber has been shown in the same study to lower serum cholesterol, and thus also provides a desired positive health benefits.

However, the water-soluble dietary fiber compositions prepared by the-known process can be improved upon.

It is therefore an object of the present invention to provide a process for producing a water-soluble dietary fiber composition which, when used as a food ingredient, provides products having improved properties. The present invention provides a process for producing a water-soluble dietary fiber composition wherein an aqueous dispersion of a gelatinised, milled, beta-glucan containing grain-based substrate is treated with an alpha-amylase under conditions which will hydrolyze said substrate and yield a soluble fraction and an insoluble fraction, including separating said soluble fraction from said insoluble fraction, and recovering from said soluble fraction said water-soluble dietary fiber substantially free of water-insoluble fiber, characterized by treating beta-glucans released from the grain-based substrate with beta-glucanase under conditions which will hydrolyze the beta-glucans.

### DETAILED DESCRIPTION OF THE INVENTION

The present invention relates to an improvement to a known process for preparing a water-soluble dietary fiber composition. The general process parameters of the known process are as discussed in U.S. Patent No. 4,996,063. In the known process, an aqueous dispersion of a gelatinized, milled, oat substrate is treated with an alpha-amylase enzyme under conditions which will hydrolyze the substrate and yield a soluble fraction and an insoluble fraction. The soluble fraction is separated from the insoluble fraction, and the water-soluble dietary fiber is recovered from the soluble fraction substantially free of water-insoluble fiber. The water-soluble dietary fiber composition resulting from this process comprises beta-glucan, which is a water-soluble dietary fiber, and starch.

During the course of this known process, the oat substrate is hydrolyzed, which, among other things, causes beta-glucans to be released from the substrate. The present invention comprises an improvement over the known process wherein the released beta-glucans are treated with beta-glucanase enzyme. During such treatment, the beta-glucanase acts as a catalyst for the hydrolysis of any present beta-glucan molecules. This beta-glucanase treatment allows for a final water-soluble dietary fiber composition which provides improved properties when used in the preparation of food items as compared to untreated water-soluble dietary fiber compositions.

The substrate utilized in the '063 patent is limited to oat. However, in the present invention, any variety of milled, gelatinized beta-glucan containing grain-based substrate capable of undergoing hydrolysis in the presence of alpha-amylase may be used. In addition to the oat substrate used in the process of the '063 patent, examples of other useful grain-based substrates include, but are not limited to, barley, rice, and mixtures thereof. Oat, barley and mixtures thereof are preferred substrates, with oat being most preferred. The milled substrates may be in the form of bran, flour, or bran concentrates, or any other appropriate form known to those skilled in the art, with bran and flour being preferred and flour being most preferred.

The exact type or types of beta-glucans released will depend upon the type of grain-based substrate utilized. For example, oat and barley based substrates would release 1,4-beta- and 1,3-beta-glucans.

The released beta-glucans are typically treated by adding beta-glucanase to the known process. The beta-glucanase can be added at any point in the process, i.e., together with the alpha-amylase; after the grain-based substrate is hydrolyzed with the alpha-amylase to yield a soluble and insoluble fraction; after separation of the soluble fraction from the insoluble fraction; at the process end; or at any other point. The beta-glucanase may even be added to a dried, water-soluble dietary fiber composition product prepared by the known process, provided the dried composition is re-hydrated. Re-hydration is necessary because the beta-glucanase acts to catalyze the hydrolysis of the present beta-glucans, and if no water is present, there can be no hydrolysis.

The beta-glucanase utilized may be obtained from any one of the various sources known to those skilled in the art. For example, beta-glucanase may be obtained from fungi sources, including but not limited to Asperillus niger, Trichoderma longibrachiatum, and Penicillium emersonii. The Asperillus niger can be obtained under the trade name Finizym™ from Novo Laboratories, and the Trichoderma longibrachiatum can be obtained under the trade name Laminex BG™ from Genencor International, located in Rolling Meadows, Illinois. Beta-glucanase may also be obtained from bacteria, an example of which includes, but is not limited to, Bacillus subtilis. The beta-glucanase from Bacillus subtilis can be obtained under the trade name Cereflo™ 200 L, as already discussed herein. Beta-glucanase can also be obtained from yeast, examples of which include but are not limited to Saccharomyces cerervisiae. The preferred enzyme is Cereflo™ 200 L from the bacterium Bacillus subtilis.

In a typical method of obtaining beta-glucanase from such sources, an organism (e.g., fungi, bacteria or yeast) is grown in a medium in a containment vessel, such as a fermentation tank. An example of a useful medium is corn steep liquor. Depending upon the organism, the beta-glucanase may be secreted into the medium, whereupon it is extracted and purified, or it may be necessary to extract the beta-glucanase by rupturing the organism cell walls, after which the beta-glucanase may be purified.

The beta-glucanase obtained from the various sources perform the same function, i.e., catalyze the hydrolysis of present beta-glucans, although each differing beta-glucanase will optimally perform this function under different conditions. For example, for beta-glucanase obtained from the fungus Asperillus niger the optimum temperature and pH are about 60° C and about 5; for beta-glucanase obtained from the fungus Penicillium emersonii the optimum temperature and pH are about 70° C and about 4; for beta-glucanase obtained from the fungus Trichoderma longibrachiatum the optimum temperature and pH are about 60° C and about 5; and for beta-glucanase obtained from the bacteria Bacillus subtilis the optimum temperature and pH are about 50-60° C and about 7. The optimal enzymatic conditions for each specific enzyme are typically provided by the supplier of the enzyme.

The beta-glucans released in the known process are treated with a sufficient amount of beta-glucanase for a sufficient length of time, and under sufficient temperature and pH conditions, to provide a water-soluble dietary fiber composition which, when used as an additive or fat replacement in a food product, imparts improved properties such as increased moisture retention; better mouthfeel, including creamier texture and less of a paste-like sensation; increased volume in baked goods; etc.; as compared to food products prepared with untreated water-soluble dietary fiber compositions. Each of these individual process parameters is to a great degree dependent upon factors such as the type of substrate used, i.e., oat, barley, etc.; the source of enzyme; and the point in the known process at which the beta-glucans are treated with the enzyme. Thus, the optimal parameters for carrying out the process of the present invention will depend upon each of these factors.

Additionally, it is important that, through the manipulation of the process parameters, the beta-glucanase should not be allowed to catalyze the hydrolysis of the beta-glucans to too great an extent. While not intending to be bound by theory, it is believed that during the beta-glucanase treatment the beta-glucan molecules are hydrolyzed to the point where they reach an optimal mixture comprised of beta-glucan molecules of varying chain lengths. It is believed this mix provides the final water-soluble dietary fiber composition with desired properties when used as a food additive or fat substitute. Thus, the treatment of the beta-glucans should not be allowed to continue beyond the point at which the optimum mixture of beta-glucan molecule chain lengths are obtained.

The amount of beta-glucanase used in the process of the present invention can be expressed as the weight ratio of beta-glucanase used for treatment to the amount of initial grain-based substrate used in the process. In general, a typical weight ratio of beta-glucanase to initial beta-glucan containing grain-based substrate will be in the range of from about 4x10⁻⁶:1 to about 2x10⁻²:1, preferably from about 4x10⁻⁵:1 to about 8x10⁻³:1 (beta-glucanase:grain-based substrate). In a preferred example, when oat flour is used as a substrate and Cereflo™ 200 L is the enzyme source, the weight ratio of beta-glucanase to oat flour will be in the range of from about 2x10⁻⁴:1 to about 8x10⁻³:1, preferably from about 4x10⁻⁴:1 to about 4x10⁻³:1 (beta-glucanase:oat flour). In another preferred example, when barley flour is used as a substrate and Cereflo™ 200 L is the enzyme source, the weight ratio of beta-glucanase to barley flour will be in the range of from about 2x10⁻⁴:1 to about 8x10⁻ ³:1, preferably from about 4x10⁻⁴:1 to about 4x10⁻³:1 (beta-glucanase:barley flour).

As already stated herein, the time of actual treatment of the released beta-glucans with beta-glucanase will depend upon the type of substrate and enzyme utilized, as well as the point in the process at which the treatment occurs. For example, if the beta-glucanase is added to the process together with the alpha-amylase, a longer treatment time may be required than if the beta-glucanase is added to the process following the separation of the water-soluble dietary fiber from the water-insoluble dietary fiber. This is because the beta-glucans are released from the grain substrate over a period of time, and the beta-glucanase can more efficiently catalyze the hydrolysis of beta-glucan molecules after they are released from the substrate. Thus, the rate of hydrolysis of the substrate has a rate-limiting effect upon the hydrolysis of the beta-glucans. In contrast, if the beta-glucans are treated with beta-glucanase following separation of the soluble fiber from the insoluble fiber, then the beta-glucans have already been released and are free for hydrolysis, without the rate-limiting effect of the hydrolysis of the substrate.

Preferably the beta-glucans are treated by the addition of beta-glucanase in conjunction with the alpha-amylase to the milled, gelatinized grain-based substrate. This is because while there is some rate-limiting effect, it is not significant in comparison to the convenience and efficiency of adding the two enzymes together. Typically, when beta-glucanase is added with the alpha-amylase, treatment is carried out for a period of time in the range of from about 5 minutes to about 120 minutes, preferably from about 30 to about 90 minutes. When beta-glucanase is added after hydrolysis of the substrate to yield the water-soluble and water-insoluble dietary fiber fractions, treatment is carried out for a period of time in the range of from about 5 minutes to about 120 minutes, preferably from about 30 minutes to about 90 minutes. When beta-glucanase is added after the separation of the water-soluble dietary fiber fraction from the water-insoluble fraction, treatment is typically carried out for a period of time in the range of from about 5 minutes to about 120 minutes, preferably from about 30 minutes to about 90 minutes. If the beta-glucans are treated with beta-glucanase after completion of the known process, treatment is typically carried out for a period of time in the range of from about 5 minutes to about 120 minutes, preferably from about 45 minutes to about 90 minutes.

The beta-glucanase must be incubated, i.e., maintained at an optimum temperature, during the treatment period. Of course, as discussed before, the optimum temperature will depend upon the enzyme source and the type or types of beta-glucans being treated. Other factors to consider are the effect of the temperature upon the alpha-amylase and the grain-based substrate. Typically, when beta-glucanase is added with the alpha-amylase, treatment is carried out at a temperature in the range of from about 30° C to about 60° C, preferably from about 40° C to about 50° C. When beta-glucanase is added after the hydrolysis of the grain-based substrate to yield the water-soluble and water-insoluble dietary fiber fractions, treatment is carried out at a temperature in the range of from about 30° C to about 60° C, preferably from about 40° C to about 50° C. When beta-glucanase is added after the separation of the water-soluble dietary fiber fraction from the water-insoluble fraction, treatment is carried out at a temperature in the range of from about 30° C to about 60° C, preferably from about 40° C to about 50° C. If the beta-glucans are treated with beta-glucanase after completion of the known process, but prior to drying, treatment is carried out at a temperature in the range of from about 30° C to about 60° C, preferably from about 40° C to about 50° C.

As with the other process parameters, the pH at which treatment occurs is dependent upon the point at which treatment occurs, the type of substrate, and the source of beta-glucanase. Consideration must also be given to the effect of pH on the alpha-amylase if the beta-glucanase and alpha-amylase are added together. Typically, for beta-glucanase derived from bacteria such as Cereflo™ 200 L, the pH is maintained in the range of from about 5 to about 7, preferably from about 5 to about 6, when beta-glucanase is added with the alpha-amylase; from about 5 to about 7, preferably from about 5 to about 6 when beta-glucanase is added after the hydrolysis of the grain-based substrate to yield the water-soluble and water-insoluble dietary fiber fractions; and from about 5 to about 7, preferably from about 5 to about 6 when beta-glucanase is added after the separation of the water-soluble dietary fiber fraction from the water-insoluble fraction. If treatment occurs after completion of the known process, but prior to drying, the pH is maintained in the range of from about 5 to about 7, preferably from about 5 to about 6.

If necessary, the pH may be adjusted by any method known to those skilled in the art. Typical food grade acids useful for adjusting pH include, but are not limited to, phosphoric acid, citric acid, hydrochloric acid, adipic acid, malic acid, and fumaric acid, with phosphoric acid and citric acid being preferred and phosphoric acid being most preferred.

The length of time of the treatment is controlled by inactivating the beta-glucanase after the desired treatment period has been achieved. The beta-glucanase may be inactivated by any method known to those skilled in the art, giving consideration to other factors such as the source of beta-glucanase used and the point in the process at which the beta-glucans are treated with the beta-glucanase. For example, if the beta-glucanase is added to the process in conjunction with the alpha-amylase, care must be taken to avoid inadvertently inactivating the alpha-amylase before it fulfills its function as a catalyst for the hydrolysis of the substrate. Examples of useful methods of inactivating the beta-glucanase include, but are not limited to, heat treatment of the slurry, raising or lowering the pH of the slurry, and/or a combination of both. The preferred method of inactivating the beta-glucanase is by heating the slurry to a temperature greater than about 90° C for a corresponding length of time in the range of from about 5 minutes to about 45 minutes, preferably from about 10 minutes to about 20 minutes, respectively.

As already stated herein, the beta-glucanase treatment may be carried out even after the known process is completed and a dried, finished water-soluble dietary fiber composition product is obtained. Furthermore, this may occur at almost any time after completion of the known process, i.e., hours, days, weeks, etc., provided there is no deterioration of the fiber composition product. When treatment is carried out in this manner, a preferred process in accordance with the present invention comprises: (a) preparing an aqueous suspension comprising the water-soluble dietary fiber composition recovered from milled products of beta-glucan containing grain-based substrates after enzymatic hydrolysis with alpha-amylase of the milled products in accordance with the known process already discussed herein; (b) preparing a slurry by combining beta-glucanase with the aqueous suspension; (c) incubating the slurry; and (d) inactivating the beta-glucanase.

The aqueous suspension contains from about 10% to about 40%, preferably from about 23% to about 27% by weight of water-soluble dietary fiber recovered from milled beta-glucan containing grain-based substrates after enzymatic hydrolysis with alpha-amylase. The aqueous suspension is preferably maintained at a temperature in the range of from about 10° C to about 60° C, preferably from about 15° C to about 30° C.

The aqueous suspension is typically formed by adding the water-soluble dietary fiber to water, followed by mixing. The mixing is preferably accomplished by stirring or blending, and is preferably carried out for a length of time sufficient to provide for a thorough distribution of the ingredients, typically from about 30 seconds to about 300 seconds, more typically from about 30 seconds to about 120 seconds. By thorough distribution, it is meant that the fiber tends to be dispersed evenly throughout the water, without a significant tendency to be concentrated in any particular region of the water.

After the aqueous suspension is prepared, beta-glucanase, preferably Cereflo™ 200 L, is added to the suspension to form a slurry. The beta-glucanase is added in amounts sufficient to enzymatically react with the water-soluble dietary fiber to provide a water-soluble dietary fiber composition which, when used as an additive or fat replacement in a food product, imparts improved properties such as increased moisture retention, better mouthfeel, increased volume in baked goods, etc., as compared to food products prepared with untreated water-soluble dietary fiber compositions. Typically the slurry comprises from about 0.005% to about 0.2%, preferably from about 0.01% to about 0.1% by weight beta-glucanase.

Following addition of the beta-glucanase, the slurry is mixed, preferably by blending and/or stirring, and preferably for a length of time sufficient to allow for a substantially uniform distribution of the beta-glucanase throughout the slurry, more preferably for about 15 seconds to about 120 seconds, still more preferably from about 30 seconds to about 60 seconds. By "substantially uniform distribution" it is meant that the beta-glucanase tends to be distributed throughout the entire slurry, without a significant tendency to be concentrated in any particular region of the slurry.

After being prepared, the slurry is incubated, preferably under conditions sufficient to allow the beta-glucanase to catalyze the hydrolysis of the beta-glucans present in the slurry. The slurry is preferably incubated at a temperature of from about 30° C to about 60° C, more preferably from about 40° C to about 50° C, for a corresponding length of time in the range of from about 5 minutes to about 120 minutes, more preferably from about 45 minutes to about 90 minutes, respectively. The pH of the slurry containing the preferred Cereflo™ 200 L enzyme is preferably maintained in the range of from about 5.0 to about 7.0, more preferably from about 5.0 to about 6.0.

Following incubation, the beta-glucanase is inactivated. When the preferred Cereflo™ 200 L enzyme is used, it is inactivated by heating the slurry to a temperature in excess of about 90° C for a corresponding length of time in the range of from about 5 minutes to about 45 minutes, preferably from about 10 minutes to about 20 minutes, respectively.

The product resulting from the process of the present invention, regardless of the point of beta-glucanase treatment, is a water-soluble dietary fiber composition which is colorless, white and smooth textured, and devoid of inherent undesirable color, flavor and grittiness. These physical features make this product useful as a food ingredient, and particularly as a fat replacement.

The present invention further comprises edible compositions comprising one or more edible ingredients and the beta-glucanase treated water-soluble dietary fiber product of the above-described process, as well as a method for preparing said edible compositions. Said edible compositions are typically prepared by combining said dietary fiber product with the edible ingredients, preferably food or food products. While in no way intending to be an exhaustive list, or in any way limiting, examples of food and food products useful in the present invention include but are not limited to: meats and meat containing products such as sausages, hot dogs, hams, lunchmeats, modified raw meat, and other processed meats and meat products; dairy products such as ice cream, sour cream, cheeses and cheese foods, cottage cheese, butter, yogurt, cream, whipped cream, milk and milk containing products such as milk shakes and malteds; grain-based foods such as noodles and pasta; baked goods, doughs and dry mixes for preparing baked goods, and fillings for baked goods such as breads, biscuits, rolls, muffins, cakes, doughnuts, puffed pastries, cookies, crackers, cheese cakes, and griddle products such as pancakes, waffles and french toast; condiments such as barbecue sauce, salad dressing, mayonnaise, spreads, peanut butter, mustard, catsup, margarine, dessert toppings such as hot fudge and whipped topping; soups, gravies and sauces such as white sauce, borealis, tartar, bernaise, and pasta sauces such as alfredo, marinaro and tomato; beverages such as malt beverages, flavored and unflavored carbohydrate-containing isotonic beverages, carbonated beverages and dietary beverages; juices and juice drinks; snack foods such as extruded snacks, pretzels and potato chips; confectionery items such as icings and frostings, candies, chocolate and marshmallows; desserts such as gelatins and puddings; egg substitutes; dry mixes for preparing foods and food products such as pancake mix, waffle mix, beverage mix, etc.; and frozen and solidified foods such as frozen baked goods, frozen dinners, frozen dough and frozen novelties including frozen desserts. Processed meat and meat products, dairy products, baked goods, sauces and gravies, and frozen instant dough are preferred.

In the method of preparing said edible compositions, the beta-glucanase treated water-soluble dietary fiber is added in the manner in which ingredients are typically added for the particular type of product being prepared. For example, when added to bread, all that may be required is the addition of the water-soluble dietary fiber to the dough mix. However, when used in cheese or cheese foods, additional process steps may be necessary to incorporate the fiber in the cheese.

When used as an additive or ingredient in an edible composition, the water-soluble dietary fiber of the present invention typically comprises from about 0.1% to about 40.0%, preferably from about 0.1% to about 5.0% by weight of the total edible composition. For specific products, the beta-glucanase treated product of the process of the present invention typically comprises from about 0.3% to about 1.3%, preferably from about 0.6% to about 1.0% by weight biscuit dough; from about 0.3% to about 1.3%, preferably from about 0.6% to about 1.0% by weight cookie dough; from about 0.3% to about 1.3%, preferably from about 0.7% to about 1.0% by weight of a muffin; from about 0.1% to about 0.4%, preferably from about 0.2% to about 0.3% by weight of a dinner roll; from about 0.2% to about 1.2%, preferably from about 0.6% to about 1.0% by weight of a cake; from about 0.1% to about 0.4%, preferably from about 0.2% to about 0.3% by weight of bread; from about 0.1% to about 0.5%, preferably from about 0.3% to about 0.4% by weight of a pancake; from about 0.1% to about 0.4%, preferably from about 0.2% to about 0.3% by weight of yogurt; from about 0.2% to about 1.0%, preferably from about 0.5% to about 0.8% by weight of ice cream; from about 0.5% to about 4.0%, preferably from about 1.0% to about 2.0% by weight salad dressing; from about 0.8% to about 4.0%, preferably from about 2.0% to about 3.2% by weight of a spread; and from about 0.1% to about 0.4%, preferably from about 0.2% to about 0.3% by weight of a doughnut.

In a preferred mode, the beta-glucanase treated water-soluble dietary fiber product of the present invention is used as either a partial or total fat replacement. When used as a fat replacement, the concentration of the treated water-soluble dietary fiber is generally higher than when used as a separate ingredient in addition to fats, and typically comprises from about 2% to about 50%, preferably from about 4% to about 40% by weight of the edible composition. For specific products, the beta-glucanase treated product of the process of the present invention typically comprises from about 2.6% to about 5.2%, preferably from about 2.9% to about 3.5% by weight cookie dough; from about 2.2% to about 4.4%, preferably from about 2.4% to about 3.0% by weight of a baked biscuit; from about 2.5% to about 5.2%, preferably from about 2.8% to about 3.4% by weight of a muffin; from about 0.7% to about 1.4%, preferably from about 0.8% to about 1.0% by weight of a dinner roll; from about 2.4% to about 4.8%, preferably from about 2.6% to about 3.2% by weight of a cake; from about 0.8% to about 1.6%, preferably from about 0.9% to about 1.1% by weight of bread; from about 1.0% to about 2.0%, preferably from about 1.1% to about 1.4% by weight of a pancake; from about 0.8% to about 1.6%, preferably from about 0.9% to about 1.1% by weight of yogurt; from about 2.0% to about 4.0%, preferably from about 2.2% to about 2.7% by weight of ice cream; from about 1.0% to about 6.0%, preferably from about 4.0% to about 5.0% by weight salad dressing; from about 15% to about 50%, preferably from about 25% to about 40% by weight of a low fat spread; and from about 0.8% to about 1.6%, preferably from about 0.9% to about 1.1% by weight of a doughnut.

The present invention is further illustrated, but not limited by, the following examples.

### EXAMPLES

### Example 1

The following is a method for preparing a water-soluble, dietary fiber composition obtained from a gelatinized, milled, oat substrate and treating said dietary fiber composition with beta-glucanase.

One hundred g (dry basis) of oat flour (The Quaker Oats Company, Cedar Rapids, Iowa) was slurried in 400 ml of water containing 25 ppm of calcium (0.09 g/l CaCl₂·2H₂O) and gelatinized by passage through a steam injection cooker at 138°-143° C (30-40 psi steam pressure). The gelatinized mixture is collected in a container, and the pH is adjusted to 7 with 1.0N NaOH. Alpha-amylase (as "Enzeco Thermolase" from the Enzyme Development Div., Biddle Sawyer Corporation, New York, NY.) is added to the mixture at 95° C in an amount sufficient to provide 24 units of amylase activity per gram of oat flour, where 1 unit of amylase activity is the amount of enzyme required to hydrolyze 10 mg of starch per minute under specified conditions [Enzyme Development Div., Biddle Sawyer Corp., New York, NY, Technical Bulletin No. 20 (Revised 7/86)]. After 20 minutes of stirring at 95° C, the starch is liquefied, and the enzyme is inactivated by passing the mixture through the steam injection cooker. the mixture is allowed to cool to about 70° C, and is centrifuged for 30 minutes at 5000 RPM. The water-soluble fiber product in the supernatant solution is recovered by decanting the solution and freeze-drying. The insoluble residue obtained from centrifuging is removed and air-dried.

Twenty five g (dry basis) of this recovered water-soluble dietary fiber product is added to 75 g of tap water at 25° C to prepare a mixture. The mixture is blended for 1 minute using a hand-held blender to form a slurry. The pH of the slurry is adjusted to 6.5 with phosphoric acid. 0.01 g of beta-glucanase (Cereflo™ 200 L) is added to the slurry, and the slurry is blended using a hand-held blender for 30 seconds. The slurry is then incubated for a period of 1 hour at a temperature of 45° C. Following incubation, enzyme activity is terminated by heating the slurry for 10 minutes at 90° C.

The slurry can be used as a food ingredient or fat substitute in food products.

### Example 2

A process similar to the process in Example 1 wherein 10 g (dry basis) of the recovered water-soluble dietary fiber product is added to 90 g of tap water at 10° C to prepare a mixture. The mixture is blended for 30 seconds using a hand-held blender to form a slurry. The pH of the slurry is adjusted to 5.5 with citric acid. 0.005 g of beta-glucanase (Cereflo™ 200 L) is added to the slurry, and the slurry is blended using a hand-held blender for 15 seconds. The slurry is then incubated for a period of 2 hours at a temperature of 30° C. Following incubation, enzyme activity is terminated by heating the slurry for 5 minutes at 90° C.

The slurry can be used as a food ingredient or fat substitute in food products.

### Example 3

A process similar to the process in Example 1 wherein 40 g (dry basis) of the recovered water-soluble dietary fiber product is added to 60 g of tap water at 60° C to prepare a mixture. The mixture is blended for 5 minutes using a hand-held blender to form a slurry. The pH of the slurry is adjusted to 6.5 with malic acid. 0.2 g of beta-glucanase (Cereflo™ 200 L) is added to the slurry, and the slurry is blended using a hand-held blender for 2 minutes. The slurry is then incubated for a period of 10 minutes at a temperature of 60° C. Following incubation, enzyme activity is terminated by heating the slurry for 45 minutes at 90° C.

The slurry can be used as a food ingredient or fat substitute in food products.

### Example 4

The following is a method for preparing a water-soluble, dietary fiber composition obtained from a gelatinized, milled, oat substrate and treating said dietary fiber composition with beta-glucanase.

One hundred g (dry basis) of oat flour (The Quaker Oats Company, Cedar Rapids, Iowa) is slurried in 400 ml of water containing 25 ppm of calcium (0.09 g/l CaCl₂·2H₂O) and gelatinized by passage through a steam injection cooker at 138°-143° C (30-40 psi steam pressure). The gelatinized mixture is collected in a container, and the pH is adjusted to 6.5 with phosphoric acid. The mixture is then cooled to 45° C. Beta-glucanase (Cereflo™ 200 L) is added to the mixture at 45° C in an amount sufficient to provide 0.8 units of glucanase activity per gram of oat flour, where 1 unit of glucanase activity is the amount of enzyme required to degrade barley beta-glucan to reducing carbohydrates with a reduction power corresponding to 1 micromole of glucose per minute under specified conditions [Novo Laboratories, Danbury, CT., Cereflo™ product specification sheet.] The beta-glucanase containing mixture is stirred at a temperature of 45° C for a period of 60 minutes, after which the mixture temperature is raised to 95° C. Alpha-amylase (as "Enzeco Thermolase" from the Enzyme Development Div., Biddle Sawyer Corporation, New York, NY.) is then added to the mixture at 95° C in an amount sufficient to provide 24 units of amylase activity per gram of oat flour, where 1 unit of amylase activity is the amount of enzyme required to hydrolyze 10 mg of starch per minute under specified conditions [Enzyme Development Div., Biddle Sawyer Corp., New York, NY, Technical Bulletin No. 20 (Revised 7/86)]. The mixture is then stirred by a hand mixer at a temperature of 95° C for a period of 20 minutes. During this period the beta-glucanase enzyme is rendered inactive. After stirring, the starch is liquefied, and the alpha-amylase enzyme is inactivated by passing the mixture through the steam injection cooker. The mixture is allowed to cool to about 70° C, and is centrifuged for 30 minutes at 5000 RPM. The water-soluble fiber product in the supernatant solution is recovered by decanting the solution and freeze-drying. The insoluble residue obtained from centrifuging is removed and air-dried.

The recovered water-soluble fiber product can be used as a food ingredient or fat substitute in food products.

### Example 5

The following is a method for preparing a water-soluble, dietary fiber composition obtained from a gelatinized, milled, barley substrate and treating said dietary fiber composition with beta-glucanase.

One hundred g (dry basis) of barley flour (The Quaker Oats Company, Cedar Rapids, Iowa) is slurried in 400 ml of water containing 25 ppm of calcium (0.09 g/l CaCl₂·2H₂O) and gelatinized by passage through a steam injection cooker at 138-143° C (30-40 psi steam pressure). The gelatinized mixture is collected in a container, and the pH is adjusted to 7 with 1.0N NaOH. Alpha-amylase (as "Enzeco Thermolase" from the Enzyme Development Div., Biddle Sawyer Corporation, New York, NY.) is added to the mixture at 95° C in an amount sufficient to provide 24 units of amylase activity per gram of barley flour, where 1 unit of amylase activity is the amount of enzyme required to hydrolyze 10 mg of starch per minute under specified conditions [Enzyme Development Div., Biddle Sawyer Corp., New York, NY, Technical Bulletin No. 20 (Revised 7/86)]. After 20 minutes of stirring at 95° C, the starch is liquefied, and the enzyme is inactivated by passing the mixture through the steam injection cooker. the mixture is allowed to cool to about 70° C, and is centrifuged for 30 minutes at 5000 RPM. The water-soluble fiber product in the supernatant solution is recovered by decanting the solution and freeze-drying. The insoluble residue obtained from centrifuging is removed and air-dried.

Twenty five g (dry basis) of this recovered water-soluble dietary fiber product is added to 75 g of tap water at 25° C to prepare a mixture. The mixture is blended for 1 minute using a hand-held blender to form a slurry. The pH of the slurry is adjusted to 6.5 with phosphoric acid. 0.01 g of beta-glucanase (Cereflo™ 200 L) is added to the slurry, and the slurry is blended using a hand-held blender for 30 seconds. The slurry is then incubated for a period of 1 hour at a temperature of 45° C. Following incubation, enzyme activity is terminated by heating the slurry to 90° C for 10 minutes.

The slurry can be used as a food ingredient or fat substitute in food products.

### Example 6

The following is a recipe for preparing no-fat-added muffins containing the beta-glucanase treated water-soluble dietary fiber composition prepared in example 1:

| Ingredient | Wt. % |
|---|---|
| Cake Flour | 32.11 |
| Sugar | 25.00 |
| Water | 21.32 |
| Beta-Glucanase Treated Water-Soluble Dietary Fiber | 15.81 |
| Non-Fat Dried Milk | 2.20 |
| Dried Whole Egg | 2.02 |
| Salt | 0.94 |
| Sodium Aluminum Phosphate | 0.30 |
| Baking Soda | 0.30 |
| TOTAL | 100.00 |

One hundred g of muffin batter is prepared as follows:

Cream the sugar with 3.15 g of the beta-glucanase treated water-soluble dietary fiber for 3 minutes at low speed using a 5-quart Hobart™ mixer. Separately combine the dry ingredients and mix for 2 minutes at low speed. Combine the creamed sugar and the dried mix and mix for 2 minutes at low speed. Add half the water and the remaining beta-glucanase treated water-soluble dietary fiber and mix for 1 minute on low speed. Add the remaining water and mix for 3 minutes on high speed.

The resulting muffin batter is baked in a muffin pan at 190° C for 30 minutes.

### Example 7

The following is a recipe for preparing a no-fat-added Italian salad dressing containing the beta-glucanase treated water-soluble dietary fiber composition prepared in example 1:

| Ingredient | Wt. % |
|---|---|
| Water | 35.50 |
| Beta-Glucanase Treated Water-Soluble Dietary Fiber | 26.00 |
| Vinegar | 22.00 |
| Butter Milk Powder | 8.00 |
| Sugar | 5.00 |
| Salt | 1.80 |
| Onion Powder | 0.50 |
| Garlic Powder | 0.40 |
| Paprika | 0.30 |
| Xanthan Gum | 0.30 |
| Oregano Leaves | 0.10 |
| Basil Leaves | 0.10 |
| TOTAL | 100.00 |

One hundred g of salad dressing is prepared as follows:

Combine water, beta-glucanase treated water-soluble dietary fiber, and vinegar in a 5-quart bowl and stir. Separately combine the dry ingredients. Add the dry ingredients to the water/dietary fiber/vinegar mixture and combine using a spoon. Blend the resulting mixture at low speed using a Braun™ hand blender until lump free.

### Example 8

The following is a recipe for preparing a no-fat-added ice cream containing the beta-glucanase treated water-soluble dietary fiber composition prepared in example 1:

| Ingredient | Wt. % |
|---|---|
| Water | 46.80 |
| Heavy Cream | 16.50 |
| Sugar | 12.00 |
| Non-Fat Dry Milk | 11.00 |
| Beta-Glucanase Treated Water-Soluble Dietary Fiber | 8.00 |
| Corn Syrup Solids | 4.00 |
| Vanilla | 1.40 |
| Stabilizer | 0.30 |
| TOTAL | 100.00 |

One hundred g of ice cream is prepared as follows:

Combine non-fat dried milk, cream and half the water, mix well and set aside. Separately combine and blend the dry ingredients with a spoon. Preheat the remaining water to 60° C and slowly blend the combined dry ingredients into the remaining preheated water at high speed using a 5-quart Hobart™ mixer. Combine the non-fat dried milk/cream/water mixture with the water/dry ingredients mixture, place in a hot water bath, and heat to 70° C with agitation. Add flavors and colors, mix well and freeze.

## Claims

1. A process for producing a water-soluble dietary fiber composition wherein an aqueous dispersion of a gelatinized, milled, beta-glucan containing grain-based substrate is treated with an alpha-amylase under conditions which will hydrolyze said substrate and yield a soluble fraction and an insoluble fraction, including separating said soluble fraction from said insoluble fraction, and recovering from said soluble fraction said water-soluble dietary fiber free of water-insoluble fiber, characterized by treating beta-glucans released from the grain-based substrate with beta-glucanase under conditions which will hydrolyze the beta-glucans.

2. A process according to claim 1, characterized in that the beta-glucans are treated by the addition of beta-glucanase to the aqueous dispersion of gelatinized, milled grain-based substrate.

3. A process according to claim 1, characterized in that the beta-glucans are treated by the addition of beta-glucanase after the soluble fraction is separated from the insoluble fraction.

4. A process according to claim 1, characterized in that the beta-glucans are treated by the addition of beta-glucanase after the water-soluble dietary fiber is recovered from the soluble fraction free of water-insoluble fiber.

5. A process according to any of claims 1 to 4, characterized in that the beta-glucan containing grain-based substrate is selected from the group comprising oat flour, oat bran, barley flour, barley bran, or mixtures thereof.

6. A process according to any of claims 1 to 5, characterized in that the beta-glucanase is derived from a bacterial source.

7. A process according to claim 6, characterized in that the beta-glucanase is derived from Bacillus subtilis.

8. A process according to any of claims 1 to 7, characterized in that the weight ratio of beta-glucanase to beta-glucan containing substrate is in the range of from 4x10⁻⁶:1 to 2x10⁻²:1.

9. A process according to any of claims 4 to 8, characterized by an aqueous suspension of the water-soluble dietary fiber recovered from milled products of beta-glucan containing grain-based substrates being prepared after enzymatic hydrolysis with alpha-amylase of the milled products; preparing a slurry by adding the beta-glucanase to the aqueous suspension; and incubating the slurry.

10. A process according to claim 9, characterized in that the aqueous suspension comprises from 10% to 40% by weight of water-soluble dietary fiber recovered from milled beta-glucan containing grain-based substrates after enzymatic hydrolysis with alpha-amylase.

11. A process according to claim 9 or 10, characterized in that the aqueous suspension is maintained at a temperature in the range of from 10°C to 60°C.

12. A process according to claim 9, 10 or 11, characterized in that the slurry comprises from 0.005% to 0.2% by weight beta-glucanase.

13. A process according to any of claims 9 to 12, characterized in that the slurry is incubated at a temperature in the range of from 30°C to 60°C.

14. A process according to claim 13, characterized in that the slurry is incubated for a length of time in the range of from 5 minutes to 120 minutes and at a pH in the range of from 5 to 7.

15. A process according to any of claims 9 to 14, characterized in that the beta-glucanase is inactivated by heat treatment.

16. A process according to claim 15, characterized in that the beta-glucanase is inactivated by heating the slurry to a temperature above 90°C for a length of time in the range of from 5 to 45 minutes.

17. A process according to any of claims 1 to 16, characterized by combining said beta-glucanase treated water-soluble dietary fiber composition with edible ingredients.

18. A process according to claim 17, characterized in that the edible ingredients comprise food and/or food products selected from the group comprising processed meat and meat products; dairy products; baked goods; doughs and dry mixes for preparing baked goods, fillings for baked goods and griddle products; pancakes; doughnuts; condiments; confectionery items; desserts; egg substitutes; dry mixes; snack foods; soft drinks; malt beverages; sports beverages; dietary beverages; salad dressings; spreads; soups, sauces and gravies; juice drinks; and frozen and solidified foods.

## Patentansprüche

1. Verfahren zur Herstellung einer wasserlöslichen Diätfaser-Zusammensetzung, bei welcher eine wässrige Dispersion eines gelatiniertes, gemahlenes Beta-Glucan enthaltenen Substrats auf Kornbasis mit einer α-Amylase unter Bedingungen behandelt wird, unter denen das Substrat hydrolysiert wird und eine lösliche Fraktion und eine unlösliche Fraktion liefert, einschließend Abtrennen der löslichen Fraktion von der unlöslichen Fraktion und Gewinnen der von wasserunlöslicher Faser freien wasserlöslichen Diätfaser aus der löslichen Fraktion, gekennzeichnet durch Behandeln der von dem Substrat auf Kornbasis freigesetzten Beta-Glucane mit β-Glucanase unter Bedingungen, unter denen die Beta-Glucane hydrolysieren.

2. Verfahren nach Anspruch 1, dadurch gekennzeichnet, daß die Beta-Glucane durch Zusatz von β-Glucanase zu der wässrigen Dispersion von gelatiniertem, gemahlenem Substrat auf Kornbasis behandelt werden.

3. Verfahren nach Anspruch 1, dadurch gekennzeichnet, daß die Beta-Glucane durch Zusatz von β-Glucanase behandelt werden, nachdem die lösliche Fraktion von der unlöslichen Fraktion abgetrennt wurde.

4. Verfahren nach Anspruch 1, dadurch gekennzeichnet, daß die Beta-Glucane durch Zusatz von β-Glucanase behandelt werden, nachdem die wasserlösliche Diätfaser aus der löslichen Fraktion gewonnen wurde, die frei ist von wasserunlöslicher Faser.

5. Verfahren nach einem der Ansprüche 1 bis 4, dadurch gekennzeichnet, daß das Beta-Glucan enthaltenes Substrat auf Kornbasis ausgewählt wird aus der Gruppe, bestehend aus Hafermehl, Haferkleie, Gerstenmehl, Gerstenkleie oder Mischungen davon.

6. Verfahren nach einem der Ansprüche 1 bis 5, dadurch gekennzeichnet, daß β-Glucanase von einer bakteriellen Quelle deriviert wird.

7. Verfahren nach Anspruch 6, dadurch gekennzeichnet, daß die β-Glucanase von Bacillus subtilis deriviert wird.

8. Verfahren nach einem der Ansprüche 1 bis 7, dadurch gekennzeichnet, daß das Gewichtsverhältnis im Bereich von 4 x 10⁻⁶:1 ... 2 x 10⁻²:1 liegt.

9. Verfahren nach einem der Ansprüche 4 bis 8, gekennzeichnet durch eine wässrige Suspension der wasserlöslichen Diätfaser, die aus gemahlenen Produkten von Beta-Glucan enthaltenden Substraten auf Kornbasis gewonnen wird, hergestellt nach enzymatischer Hydrolyse der gemahlenen Produkte mit α-Amylase; indem eine Aufschlämmung durch Zusetzen der β-Glucanase zu der wässrigen Suspension hergestellt wird, und Inkubieren der Aufschlämmung.

10. Verfahren nach Anspruch 9, dadurch gekennzeichnet, daß die wässrige Suspension 10 % ... 40 Gewichtsprozent wasserlösliche Diätfaser aufweist, gewonnen aus gemahlenen, Beta-Glucan enthaltenden Substraten auf Kornbasis nach enzymatischer Hydrolyse mit α-Amylase.

11. Verfahren nach Anspruch 9 oder 10, dadurch gekennzeichnet, daß die wässrige Suspension bei einer Temperatur im Bereich von 10 °C ... 60 °C gehalten wird.

12. Verfahren nach Anspruch 9, 10 oder 11, dadurch gekennzeichnet, daß die Aufschlämmung 0,005 % ... 0,2 Gewichtsprozent β-Glucanase aufweist.

13. Verfahren nach einem der vorgenannten Ansprüche 9 bis 12, dadurch gekennzeichnet, daß die Aufsschlämmung bei einer Temperatur im Bereich von 30 ° ... 60 °C inkubiert wird.

14. Verfahren nach Anspruch 13, dadurch gekennzeichnet, daß die Aufschlämmung für eine Dauer im Bereich von 5 ... 120 Minuten und bei einem pH-Wert im Bereich von 5 ... 7 inkubiert wird.

15. Verfahren nach einem der vorgenannten Ansprüche 9 bis 14, dadurch gekennzeichnet, daß die β-Glucanase durch Wärmebehandlung inaktiviert wird.

16. Verfahren nach Anspruch 15, dadurch gekennzeichnet, daß die β-Glucanase durch Erhitzen der Aufschlämmung bis auf eine Temperatur oberhalb von 90 °C für eine Zeitdauer im Bereich von 5 ... 45 Minuten inaktiviert wird.

17. Verfahren nach einem der vorgenannten Ansprüche 1 bis 16, gekennzeichnet durch Vereinigen der β-Glucanase-behandelten, wasserlöslichen Diätfaser-Zusammensetzung mit Speisebestandteilen.

18. Verfahren nach Anspruch 17, dadurch gekennzeichnet, daß die Speisebestandteile und/oder Lebensmittelerzeugnisse umfassen, ausgewählt aus der Gruppe, bestehend aus verarbeitetem Fleisch und Fleischerzeugissen; Molkereiprodukten; Backwaren; Teigen und Trockenmischungen zur Herstellung von Backwaren; Füllungen für Backwaren und Grillpodukte; Pfannkuchen; Krapfen; Gewürzen; Süßwaren; Desserts; Ei-Austauschstoffen; Fertigmischungen; Snacks; Softdrinks; Malzgetränken, Sportgetränken; Diätgetränken; Salatsoßen; Brotaufstrichen; Suppen; Soßen und Bratensoßen; Fruchtgetränken; sowie tiefgefrorenen und verfestigten Lebensmitteln.

## Revendications

1. Procédé pour produire une composition de fibres alimentaires hydrosolubles dans lequel une dispersion aqueuse d'un substrat à base de grains contenant des β-glucanes broyé gélatinisé est traitée avec une α-amylase dans des conditions qui hydrolysent ledit substrat et donnent une fraction soluble et une fraction insoluble, comprenant la séparation de ladite fraction soluble d'avec ladite fraction insoluble et la récupération à partir de ladite fraction soluble desdites fibres alimentaires hydrosolubles exemptes de fibres insolubles dans l'eau, caractérisé par le traitement des β-glucanes libérés à partir du substrat à base de grains avec la β-glucanase dans des conditions qui hydrolysent les β-glucanes.

2. Procédé selon la revendication 1, caractérisé en ce que les β-glucanes sont traités par addition de β-glucanase à la dispersion aqueuse de substrat à base de grains broyé gélatinisé.

3. Procédé selon la revendication 1, caractérisé en ce que les β-glucanes sont traités par addition de β-glucanase après séparation de la fraction soluble d'avec la fraction insoluble.

4. Procédé selon la revendication 1, caractérisé en ce que les β-glucanes sont traités par addition de β-glucanase après récupération des fibres alimentaires hydrosolubles à partir de la fraction soluble exempte de fibres insolubles dans l'eau.

5. Procédé selon l'une quelconque des revendications 1 à 4, caractérisé en ce que le substrat à base de grains contenant des β-glucanes est choisi dans le groupe comprenant la farine d'avoine, le son d'avoine, la farine d'orge, le son d'orge ou leurs mélanges.

6. Procédé selon l'une quelconque des revendications 1 à 5, caractérisé en ce que la β-glucanase est issue d'une source bactérienne.

7. Procédé selon la revendication 6, caractérisé en ce que la β-glucanase est issue de Bacillus subtilis.

8. Procédé selon l'une quelconque des revendications 1 à 7, caractérisé en ce que le rapport massique de la β-glucanase au substrat contenant des β-glucanes est dans le domaine de 4 x 10⁻⁶:1 à 2 x 10⁻²:1.

9. Procédé selon l'une quelconque des revendications 4 à 8, caractérisé par la préparation d'une suspension aqueuse des fibres alimentaires hydrosolubles récupérées à partir de produits broyés de substrats à base de grains contenant des β-glucanes après hydrolyse enzymatique des produits broyés avec l'α-amylase, la préparation d'une suspension par addition de β-glueanase à la suspension aqueuse, et l'incubation de la suspension.

10. Procédé selon la revendication 9, caractérisé en ce que la suspension aqueuse comprend de 10% à 40% en masse de libres alimentaires hydrosolubles récupérées à partir de substrats à base de grains contenant des β-glucanes broyés après hydrolyse erzymatique avec l'α-amylase.

11. Procédé selon la revendication 9 ou 10, caractérisé en ce que la suspension aqueuse est maintenue à une température dans le domaine de 10°C à 60°C.

12. Procédé selon la revendication 9, 10 ou 11, caractérisé en ce que la suspension comprend de 0,005% à 0,2% en masse de β-glucanase.

13. Procédé selon l'une quelconque des revendications 9 à 12, caractérisé en ce que la suspension est incubée à une température dans le domaine de 30°C à 60°C.

14. Procédé selon la revendication 13, caractérisé en ce que la suspension est incubée pendant une durée dans le domaine de 5 min à 120 min et à un pH dans le domaine de 5 à 7.

15. Procédé selon l'une quelconque des revendications 9 à 14, caractérisé en ce que la β-glucanase et inactivée par traitement thermique.

16. Procédé selon la revendication 15, caractérisé en ce que la β-glucanase est inactivée par chauffage de la suspension à une température supérieure à 90°C pendant une durée dans le domaine de 5 à 45 min.

17. Procédé selon l'une quelconque des revendications 1 à 16, caractérisé par la combinaison avec des ingrédients comestibles de ladite composition de fibres alimentaires hydrosolubles traitée avec la β-glucanase.

18. Procédé selon la revendication 17, caractérisé en ce que les ingrédients comestibles comprennent des aliments et/ou des produits alimentaires choisis dans le groupe consistant en la viande traitée et les produits à base de viande, les produits laitiers, les produits cuits, les pâtes et les préparations sèches pour préparer des produits cuits, les garnitures pour les produits cuits et les produits de type galettes, les crêpes, les beignets, les condiments, les produits de confiserie, les desserts, les substituts des oeufs, les préparations sèches, les aliments pour repas rapides, les boissons sans alcool, les boissons à base de malt, les boissons pour sportifs, les boissons alimentaires, les assaisonnements pour salades, les produits à tartiner, les soupes, sauces et sauces au jus, les boissons à base de jus, et les aliments congelés et solidifiés.
